Europäisches Patentamt

European Patent Office

Office européen des brevets

(19)

(11) Publication number: 0 199 171
A2

# (12) EUROPEAN PATENT APPLICATION

(21) Application number: 86104731.4

(22) Date of filing: 07.04.86

(51) Int. Cl.⁴: C 08 H 1/04
C 09 D 3/06

(30) Priority: 11.04.85 PL 252873

(43) Date of publication of application:
29.10.86 Bulletin 86/44

(84) Designated Contracting States:
AT CH DE FR GB IT LI NL SE

(71) Applicant: POLITECHNIKA WARSZAWSKA
Plac Jednosci Robotniczej 1
00-661 Warszawa(PL)

(71) Applicant: "POLIFARB" PILAWSKIE ZAKLADY FARB I
LAKIEROW
ul. Przemyslowa 3
Pilawa(PL)

(72) Inventor: Brzozowski, Zbigniew
ul. Bruna 28/37
Warszawa(PL)

(72) Inventor: Lorens, Krzysztof
Górzno 76
Górzno 76(PL)

(72) Inventor: Pietrzak, Bogdan
ul. Grzybowska 39/109
Warszawa(PL)

(72) Inventor: Schmidt, Elzbieta
ul. Zukowowa 5
Sulejówek(PL)

(74) Representative: Ahner, Francis et al,
CABINET REGIMBEAU 26, avenue Kléber
F-75116 Paris(FR)

(54) A method for manufacturing casein-based, coat forming polymers of increased elasticity.

(57) A method of obtaining casein-based, coat-forming polymers of increased elasticity involves reacting casein with compounds having an epoxy grouping, and particularly with glycydol at a rate of 0.1–300% by weight in relation to casein over a temperature range of 20–120°C. In addition to glycydol use is made in the reaction of other epoxy compounds, and particularly epichlorhydrin or glycydol ethers. The reaction can also be carried out using other epoxy compound instead of glycydol. In case the reaction is carried out in an aqueous solution, it is preferred to add dicyandiamide or urea at a rate of 30% in relation to casein.

EP 0 199 171 A2

Croydon Printing Company Ltd.

A method for manufacturing

casein-based, coat forming polymers of increased elasticity

The subject of this patent is a method of manufacturing casein-based, coat forming polymers of increased elasticity.

The hitherto known casein-based, coat-forming polymers are made by grafting casein with acrylic acid and its derivatives, and particularly ethyl acrylate, in the presence of peroxide initiators. Another known method of plasticising casein is by diluting its aqueous solutions with synthetic resin solutions. An embodiment of such a method is a product made in this country under the commercial name of Kazeplast by emulsifying casein in polyester resin obtained by condensing adypic acid and glycerine.

The disadvantage of the methods involving grafting casein with acrylic acid are the processes which are onerous due to safety and fire-fighting conditions and, also, the possibility of a two-path course of the reaction towards the undesirable formation of a homopolymer and the necessity for the initiation with per initiators.

On the other hand, the disadvantage of the second of the cited methods is insufficient plasticisation, danger of product separation and impossibility of

2

obtaining higher casein concentrations of the product thus obtained.

It has turned out that casein-based coat-forming polymers of increased elasticity can be obtained by reacting casein with compounds having an epoxy grouping, particularly glicydol, at a rate of 0.1-300% by weight in relation to casein.

It is advantageous to carry out the reaction in an aqueous solution in the presence of dicyandiamide or urea catalysts over a temperature range of 20--120°C.

In order to improve the resistance of the polymer to the action of water in addition to glicydol use is made in the reaction of other epoxy compounds, and particularly epichlorhydrin or glicydyl ethers, such as butyl-glicydyl and phenyl-glicydyl ethers at a rate of 0.1-100% by weight in relation to glicydol.

Glicydol may also be replaced by other epoxy compounds, such as epichlorhydrin and/or glycide ethers and/or propylene oxide.

The method per this present invention allows one to obtain a protein solution of markedly increased biological resistance, which permits classic poisons of toxic nature to be eliminated.

According to this present invention, the method allows polymers of high elasticity to be obtained, with the simultaneous maintenance of the advantageous coating properties of unmodified casein, such as permeability to water vapour and relatively high hardness. In order to decrease the viscosity of an aqueous solution of casein and, thus, to increase its concentration in the solution, dicyanamide or urea are added at a rate of up to 30% by weight in relation to casein, a certain preservative effect being thereby obtained.

The products obtained as per this present invention can be employed in the lacquer and paint industry, particularly for printing inks, in tanning, etc.

The method as per this present invention is explained closer by the embodiments provided below.

Example 1

40 g of casein, 90 g of water are placed in a three-way flask provided with a stirrer, a thermometer and a reflux condenser, and 5 g of 25% $NH_3$ solution are added. The whole is heated up to a temperature of 85°C. During the heating, a homogeneous solution is obtained. The flask is stopped being heated, glycydol is dropped in small portions, the dropping speed being adjusted so that the temperature of the reaction should not exceed 95°C.

After 40 g of glycydol have been dropped and the temperature of the reaction has decreased to 85°C, the heating system is switched on, the reaction mixture is again heated to a temperature of about 200°C and the heating is continued for 1-2 hours.

After being cooled, the product of the reaction can be diluted with water and/or a mixture of water and ethanol to a convenient viscosity and 5 g of dicyandiamide or urea added. After being applied to polyethylene film, the reaction product forms a transparent film of high elasticity on cooling.

Example 2

The synthesis is carried out in the identical way as in Example 1, the difference being that 30 g of glycydol are added.

A product of higher viscosity is obtained, forming a transparent film of lower elasticity but higher hardness on cooling.

Example 3.

The synthesis is carried out in the identical way as in Examples 1 and 2, the difference being that glycydol is used at a rate of 60 g in relation to 1 g of triethanolamine as the catalyst.

A product is obtained that does not dry at the ambient temperature and is very well absorbed by paper, leather and other porous materials.

Example 4

The synteresis is carried out in the identical way as in Example 1, the difference being that, in addition to 40 g of glycydol, 40 g of butyl-glycydyl ether are added to the flask in some portions after the whole amount of glycydol, i.e. after about 2 hours of the reaction proceeding.

A product is obtained which forms an elastic coat of increased resistance to the action of water.

Example 5

The synthesis is carried out in the identical way as in Example 1, the difference being that, in addition to 60 g of glycydol, 20 g of phenyl-glycydyl ether are added to the reaction mixture in small portions after the casein-glycydol reaction has been completed, i.e. two hours after the reaction has begun.

A product is obtained which does not dry at the ambient temperature, is well absorbed by paper, leather and other porous materials, and has improved resistance to the action of water.

Example 6

The synthesis is carried out in the identical way as in Example 1, the difference being that glycydol is replaced by 5 g of epichlorhydrin which is added in small portions. In case viscosity has markedly increased, the reaction mixture is diluted with water and/or a water-ethanol mixture.

A product is obtained which has lower elasticity but higher resistance to the action of water.

Example 7

The synthesis is carried out in the identical way as in Example 1, the difference being that, after the reaction with glycydol has been completed, 10 g of epichlorhydrin are added in small portions at a temperature of $80^{\circ}C$, which improves the water properties of the modification product.

## Example 8

The synthesis is carried out in the identical way as in Example 1, the difference being that, after the casein-glycydol reaction has been completed, the mixture is cooled down to a temperature $35^{o}C$ and propylene oxide is added to the flask in small portions, adjusting the dropping speed so that the reaction temperature should not exceed $40^{o}C$.

The reaction results in a product of improved elasticity being obtained.

Example 8

## Patent Claims

1. A method of obtaining casein-based, coat-forming polymers of increased elasticity, characterised in that casein is acted upon by compounds having an epoxy grouping, and particularly glycydol at a rate of 0.1-300 % by weight in relation to casein, preferably in an aqueous solution over a temperature range of 20-120°C.

2. A method as per Claim 1, characterised in that, in addition to glycydol, other epoxy compounds are used in the reaction, and particularly epichlorhydrin at a rate of 0.1-10% by weight in relation to glycydol.

3. A method as per Claim 1, characterised in that, in addition to glycydol, glycydyl ethers are used in the reaction at a rate of 0.1-100% by weight in relation to glycydol.

4. A method as per Claim 3, characterised in that butyl-glycydyl ether is used as glycydyl ethers.

5. A method as per Claim 3, characterised in that phenyl-glycydyl ether is used as glycydyl ethers.

6. A method as per Claim 1, characterised in that dicyandiamide is added at a rate of 30% in relation to casein to the aqueous solution before casein reacts with the epoxy compound.

7. A method as per Claim 1, characterised in that urea is added at a rate of 30% in relation to casein to the aqueous solution before casein reacts with the epoxy compound.

8. A method of obtaining casein-based, coat-forming polymers of increased elasticity, characterised in that casein is acted upon by compounds having an epoxy grouping, and particularly epichlorhydrin and for ethylene oxide and/or propylene oxide and/or glycydyl ether at a rate of 0.1-200% by weight in relation to casein, preferably in an aqueous solution over a temperature range of 20-120°C.

9. A method as per Claim 8, characterised in that dicyandiamide is added at a rate of up to 30% in relation to casein to the aqueous solution before casein reacts with the epoxy compound.

10. A method as per Claim 8, characterised in that urea is added at a rate of 30% in relation to casein to the aqueous solution before casein reacts with the epoxy compound.